# FASCICULE DE BREVET EUROPEEN

(11) **EP 3 755 922 B1**
(45) Date de publication et mention de la délivrance du brevet: **09.03.2022**
(21) Numéro de dépôt: 19713098.2
(22) Date de dépôt: 22.02.2019
(51) Int. Cl.: F16G 3/08

(54) **DISPOSITIF DE JONCTION A ENTRETOISE POUR RELIER LES DEUX EXTRÉMITÉS D'UNE BANDE TRANSPORTEUSE**
VERBINDUNGSVORRICHTUNG MIT ABSTANDSHALTER ZUM VERBINDEN DER BEIDEN ENDEN EINES FÖRDERBANDES
JOINING DEVICE WITH SPACER FOR LINKING THE TWO ENDS OF A CONVEYOR BELT

(30) Priorité: 22.02.2018 FR 1851535
(43) Date de publication de la demande: 30.12.2020
(73) Titulaire: FP Business Invest, 42400 Saint-Chamond (FR)
(72) Inventeur: TAVERNIER, Bernard, 42400 SAINT-CHAMOND (FR)
(74) Mandataire: Alatis
(86) Numéro de dépôt international: PCT/FR2019/050408
(87) Numéro de publication internationale: WO 2019/162630

(56) Documents cités:
- EP-A1- 1 163 459
- US-A- 2 446 311
- US-A- 3 748 698

## Description

L'invention concerne un dispositif de jonction pour relier les deux extrémités d'une bande transporteuse longitudinale.

Dans un but de simplification le terme de bande transporteuse aura, par convention, dans la présente description aussi bien le sens de bande transporteuse que celui de courroie.

On connaît les bandes transporteuses, appelées également tapis transporteurs, utilisées pour transporter différents matériaux ou différents produits, tels que du charbon, des minerais, des produits industriels ou agricoles.

Ces bandes transporteuses consistent en des bandes réalisées en un élastomère armé, ou en une matière de synthèse armée, d'une longueur et d'une largeur appropriées, dont les extrémités doivent être reliées entre elles, avant montage, ou après montage, sur des dispositifs de support et d'entraînement comportant des rouleaux de renvoi et des rouleaux fous. Souvent ces dispositifs comportent également des organes tendeurs, ayant pour but de bien tendre la bande transporteuse.

On connaît un dispositif de jonction qui comporte des agrafes en forme générale de U, découpées dans du feuillard métallique, lesquelles agrafes comportent des plaques supérieures et des plaques inférieures reliées par des charnons.

Les agrafes sont fixées en deux séries à cheval sur chacune des extrémités de bande transporteuse à relier, de telle sorte que les charnons dépassent et que ceux d'une série puissent être imbriqués entre les charnons de l'autre série.

Une tige de liaison et d'articulation est passée à l'intérieur des charnons imbriqués de manière à relier ainsi les deux extrémités en formant une sorte de charnière.

Les dispositifs de fixation pour fixer les agrafes sur les extrémités de bande transporteuse consistent en des fixations à tige tels que des crampons, des rivets et des vis.

On connaît également des dispositifs de jonction faisant appel à des plaques de jonction généralement en élastomère armé ou en matière de synthèse armée, disposées respectivement sur un côté et sur l'autre côté des extrémités de bande transporteuse et fixées sur les extrémités qu'il s'agit de relier. Des exemples de tels dispositifs à plaque de jonction sont donnés dans les brevets EP-0827575-B1 et EP-1163459-B1.

Le document EP1163459 B1 divulgue le dispositif de jonction pour relier deux extrémités d'au moins une bande transporteuse longitudinale selon la préambule de la revendication 1.

Ces dispositifs comportent une plaque supérieure et une plaque inférieure qui délimitent un écartement adapté pour y engager l'extrémité respective d'une bande transporteuse.

On connaît des dispositifs de jonction qui sont réalisés par moulage ou par injection et présentent une structure en « H » dont les plaques inférieure et supérieure sont reliées par une partie centrale, les plaques étant formées d'un seul tenant.

Ce type de structure en « H » exige pour sa fabrication autant de moules que d'épaisseurs de bandes transporteuses rencontrées sur le terrain, et doit être fabriquée, de ce fait, en très petites séries, ce qui augmente le prix de revient, à la fabrication, au stockage et à la distribution.

Cette problématique, à savoir celle de la multiplicité des moules et des produits moulés devant faire face aux épaisseurs variées de bandes transporteuses, a été résolue notamment en produisant des dispositifs de jonction en trois parties distinctes : une première plaque constituant des ailes supérieures gauche et droite formant une seule pièce, une seconde plaque constituant des ailes inférieures gauche et droite formant une seule pièce, et une partie intermédiaire, correspondant à la barre médiane du profil en « H », cette partie intermédiaire formant entretoise.

Dans une telle configuration, il devient possible de fabriquer les deux plaques inférieure et supérieure isolements et chacune est configurée de sorte à être adaptée aux efforts qu'elles subissent (forces de compression/traction) et aux contraintes associées.

La fixation des plaques inférieure et supérieure sur les extrémités de la bande transporteuse s'effectue généralement au moyen de dispositifs de fixation du type par rivets, par pointes, par crampons, ou par vis-écrous.

Le document EP-1163459-B1 décrit un dispositif de jonction en trois parties distinctes du type décrit ci-dessus, qui comporte une première plaque de jonction et une seconde plaque de jonction qui sont configurées pour recouvrir chacune un côté distinct des extrémités de la bande transporteuse de sorte que la bande transporteuse est interposée verticalement entre les deux plaques de jonction.

Les deux plaques de jonction forment une première paire d'ailes qui est adaptée pour pincer une première extrémité de la bande transporteuse et une seconde paire d'ailes qui est adaptée pour pincer une seconde extrémité de la bande transporteuse, la première paire d'ailes et la seconde paire d'ailes étant agencées de part et d'autre d'un plan de jonction.

De plus, le dispositif de jonction comporte des dispositifs de fixation des plaques entre elles, et une entretoise amovible qui est interposée verticalement entre la première plaque de jonction et la seconde plaque de jonction pour écarter les plaques.

Toujours selon le document EP-1163459-B1, l'entretoise est fixée par un des dispositifs de fixation, au centre de l'ensemble formé par les deux plaques de jonction, suivant une direction longitudinale.

La fixation de la bande transporteuse par le dispositif de jonction est par exemple réalisée de la façon décrite ci-dessous chronologiquement.

Les deux ailes de la seconde paire d'ailes formée par les plaques de jonction sont écartées par déformations élastique des plaques de jonction pendant que la seconde extrémité de la bande transporteuse est insérée entre les deux ailes de la seconde paire d'ailes.

La seconde extrémité de la bande transporteuse est fixée sur les deux ailes de la seconde paire d'ailes formée par les plaques de jonction par des dispositifs de fixation.

L'entretoise est retirée d'entre les ailes de la première paire d'ailes formée par les plaques de jonction.

Enfin, la première extrémité de la bande transporteuse est insérée entre les deux ailes de la première paire d'ailes formée par les plaques de jonction, avant d'être fixée sur les deux ailes de la première paire d'ailes.

On comprend que la seconde extrémité de la bande transporteuse doit être insérée le plus loin possible longitudinalement vers le centre du dispositif de jonction, c'est-à-dire au plus proche de l'entretoise qui est agencée au centre du dispositif de jonction.

Cette étape d'insertion demande simultanément un effort important d'écartement des deux ailes de la seconde paire d'ailes qui sont retenues entre elles par le dispositif de fixation qui fixe l'entretoise, ce qui rend l'opération difficile.

La présente invention vise notamment à résoudre cet inconvénient et se rapporte pour ce faire à un dispositif de jonction pour relier deux extrémités d'au moins une bande transporteuse longitudinale, le dispositif de jonction comportant au moins :
- une première plaque de jonction et une seconde plaque de jonction qui sont configurées pour recouvrir chacune un côté distinct des extrémités de la bande transporteuse de sorte que ladite bande transporteuse est interposée verticalement entre les deux plaques de jonction, lesdites plaques de jonction formant une première paire d'ailes qui est adaptée pour pincer une première extrémité de la bande transporteuse et une seconde paire d'ailes qui est adaptée pour pincer une seconde extrémité de la bande transporteuse, la première paire d'ailes et la seconde paire d'ailes étant agencées de part et d'autre d'un plan de jonction,
- un dispositif de fixation desdites plaques de jonction entre elles,
- une entretoise amovible qui est configurée pour être interposée verticalement entre la première plaque de jonction et la seconde plaque de jonction, dans une position assemblée de l'entretoise, pour écarter lesdites plaques, et qui délimite un trou de centrage agencé pour être traversé par un élément de liaison qui fixe l'entretoise sur les plaques de jonction, caractérisé en ce que l'entretoise est adaptée pour être interposée entre les ailes de la première paire d'ailes, de sorte que le trou de centrage de l'entretoise est décalé du plan de jonction, pour libérer l'espace délimité entre la seconde paire d'ailes.

La position décentrée de l'entretoise, au-delà de la seconde paire d'ailes, favorise l'insertion de la seconde extrémité de la bande transporteuse entre la seconde paire d'ailes.

En effet, une telle position de l'entretoise favorise l'écartement des ailes de la seconde paire d'ailes, par déformation élastique.

Selon une autre caractéristique, le plan de jonction s'étend transversalement au centre de l'ensemble formé par la première plaque de jonction et la seconde plaque de jonction.

Une telle caractéristique permet en particulier d'améliorer la résistance de la jonction de la bande transporteuse par le dispositif de jonction.

Selon une autre caractéristique, l'entretoise est adaptée pour être agencée entièrement entre les ailes de la première paire d'ailes.

Cette caractéristique permet à l'entretoise de libérer complètement l'espace délimité entre la seconde paire d'ailes.

Selon une autre caractéristique, le dispositif de fixation comprend au moins un premier élément de fixation qui est monté sur la première plaque de jonction, un second élément de fixation associé qui est monté sur la seconde plaque de jonction, un élément de liaison qui relie le premier élément de fixation sur le second élément de fixation, et le premier élément de fixation comprenant une portion de centrage qui fait saillie verticalement depuis la première plaque de jonction et qui est configuré pour coopérer avec le trou de centrage de l'entretoise pour positionner l'entretoise.

Ainsi, le dispositif de fixation peut remplir une double fonction de centrage de l'entretoise et de fixation des deux plaques de jonction.

Selon une autre caractéristique, l'entretoise présente une face de butée qui est agencée en regard de la seconde paire d'ailes, et qui s'étend au moins en partie le long du plan de jonction, pour former une butée d'arrêt de la bande transporteuse suivant le plan de jonction, lorsque l'entretoise est en position assemblée.

Cette caractéristique permet l'insertion de la seconde extrémité de la bande transporteuse jusqu'au centre de l'ensemble formé par la première plaque de jonction et la seconde plaque de jonction.

Selon une autre caractéristique, la face de butée de l'entretoise présente la forme d'une portion angulaire d'un cylindre qui s'étend autour du trou de centrage de l'entretoise et qui est globalement tangente au plan de jonction.

Cette caractéristique permet à la portion angulaire de rester tangente au plan de jonction même en cas de léger pivotement.

Selon une autre caractéristique, le dispositif de jonction comporte au moins un deuxième dispositif de fixation qui est adjacent au premier dispositif de fixation, et l'entretoise délimite au moins une première face d'appui qui est agencée en regard d'au moins une partie du deuxième dispositif de fixation, pour bloquer en pivotement l'entretoise autour du trou de centrage de l'entretoise, lorsque l'entretoise est en position assemblée.

Selon une autre caractéristique, l'élément de liaison comprend une tête qui est adaptée pour coopérer avec ledit second élément de fixation, et un tronçon d'ancrage qui est adapté pour coopérer avec ledit premier élément de fixation du dispositif de fixation associé.

Selon une autre caractéristique, la première plaque de jonction et la seconde plaque de jonction sont identiques et complémentaires.

L'invention concerne également une entretoise pour un dispositif de jonction de deux extrémités d'une bande transporteuse longitudinale, le dispositif de jonction étant du type comportant au moins :
- une première plaque de jonction et une seconde plaque de jonction qui sont configurées pour recouvrir chacune un côté distinct des extrémités de la bande transporteuse de sorte que ladite bande transporteuse est interposée verticalement entre les deux plaques de jonction, lesdites plaques de jonction formant une première paire d'ailes qui est adaptée pour pincer une première extrémité de la bande transporteuse et une seconde paire d'ailes qui est adaptée pour pincer une seconde extrémité de la bande transporteuse, la première paire d'ailes et la seconde paire d'ailes étant agencées de part et d'autre d'un plan de jonction,
- un premier dispositif de fixation comprenant une portion de centrage qui fait saillie verticalement, et un deuxième dispositif de fixation qui est adjacent au premier dispositif de fixation,
l'entretoise étant adaptée pour être interposée verticalement entre la première plaque de jonction et la seconde plaque de jonction pour écarter lesdites plaques, et l'entretoise délimitant au moins :
- un trou de centrage qui est adapté pour coopérer avec ladite portion de centrage pour positionner l'entretoise,
- une première face d'appui qui s'étend globalement dans un plan axial suivant l'axe du trou de centrage et qui est adaptée pour être en appui sur au moins une partie du deuxième dispositif de fixation, pour bloquer en pivotement l'entretoise autour du trou de centrage de l'entretoise, et
- une face de butée qui est adaptée pour former une butée d'arrêt de la bande transporteuse suivant le plan de jonction.

Selon une autre caractéristique, la face de butée présente la forme d'une portion angulaire d'un cylindre qui s'étend suivant l'axe du trou de centrage de l'entretoise.

L'invention concerne enfin un procédé pour la mise en œuvre d'un dispositif de jonction selon l'une quelconques des revendications 1 à 9, le dispositif de jonction comportant une bande transporteuse qui présente une première extrémité et une seconde extrémité, caractérisé en ce qu'il comporte au moins :
- une étape d'insertion de la seconde extrémité de la bande transporteuse entre les deux ailes de la seconde paire d'ailes formée par les plaques de jonction, dans une position de jonction dans laquelle la seconde extrémité de la bande transporteuse est en appui sur l'entretoise,
- une étape de fixation de la seconde extrémité de la bande transporteuse sur les deux ailes de la seconde paire d'ailes,
- une étape de retrait de l'entretoise qui consiste à retirer l'entretoise d'entre les ailes de la première paire d'ailes formée par les plaques de jonction,
- une étape d'insertion de la première extrémité de la bande transporteuse entre les deux ailes de la première paire d'ailes formée par les plaques de jonction, dans une position de jonction, et
- une étape de fixation de la première extrémité de la bande transporteuse sur les deux ailes de la première paire d'ailes.

D'autres caractéristiques et avantages de l'invention apparaîtront à la lecture de la description détaillée qui suit pour la compréhension de laquelle on se reportera aux dessins annexés dans lesquels :
- la figure 1 est une vue d'ensemble en perspective qui illustre un dispositif de jonction selon l'invention qui relie les deux extrémités d'une bande transporteuse ;
- la figure 2 est une vue de dessus tronquée qui illustre la première plaque de jonction et deux entretoises du dispositif de jonction selon l'invention en position assemblée ;
- la figure 3 est une vue en section transversale suivant la ligne 3-3 de la figure 2, qui illustre la première plaque et la seconde plaque de jonction et l'entretoise interposée entre les deux plaques ;
- la figure 4 est une vue éclatée en perspective qui illustre la première plaque et la seconde plaque de jonction et l'entretoise interposée entre les deux plaques ;
- la figure 5 est une vue de détails en perspective qui illustre l'entretoise de la figure 2 ;
- les figures 6 à 11 illustrent des étapes du procédé pour la mise en œuvre du dispositif de jonction selon l'invention.

Dans la description et les revendications, pour clarifier la description et les revendications, on adoptera à titre non limitatif la terminologie longitudinal, vertical et transversal en référence au trièdre L, V, T indiqué aux figures.

Sur l'ensemble de ces figures, des références identiques ou analogues représentent des organes ou ensembles d'organes identiques ou analogues.

De pus, les termes « supérieur », « inférieur », « vertical » et leurs dérivés font référence à la position ou à l'orientation d'un élément ou d'un composant, cette position ou cette orientation étant considérée lorsque les plaques de jonction sont en configuration de service et s'étendent dans un plan horizontal.

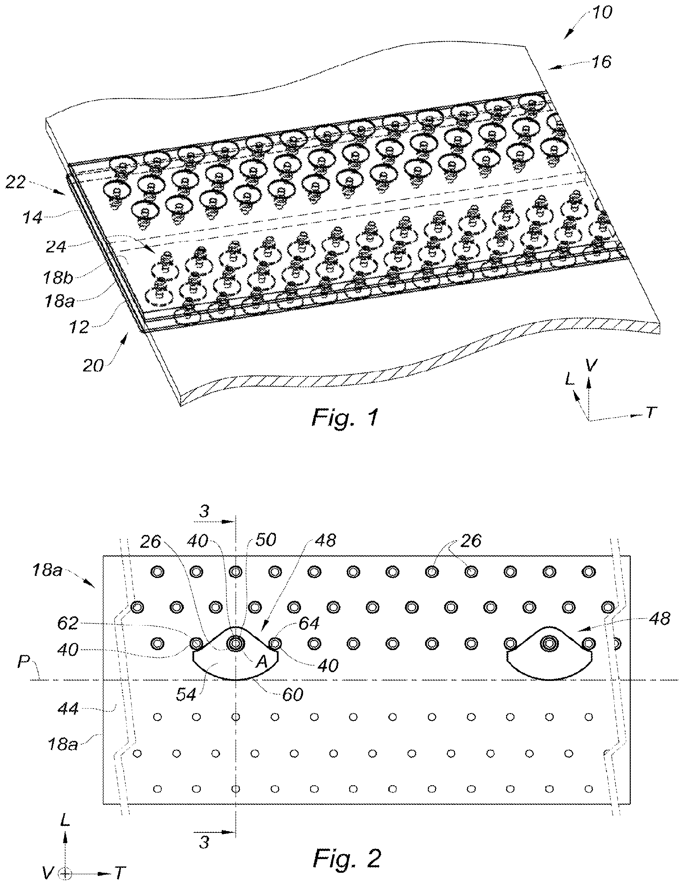

On a représenté à la figure 1 un dispositif de jonction 10 pour relier une première extrémité 12 et une seconde extrémité 14 d'une bande transporteuse 16 qui s'étend longitudinalement.

Le dispositif de jonction 10 comporte une première plaque de jonction 18a inférieure visible à la figure 2, et une seconde plaque de jonction 18b supérieure.

Ces plaques de jonctions 18a, 18b sont réalisées en une matière souple et élastique, par exemple en caoutchouc vulcanisé, ou en une matière de synthèse telle que du polyuréthane et elles comportent généralement une armature incorporée, généralement de type textile.

Les plaques de jonction 18a, 18b sont configurées pour recouvrir chacune un côté distinct des extrémités de la bande transporteuse 16 de sorte que la bande transporteuse 16 est interposée verticalement entre les deux plaques de jonction 18a, 18b, comme on peut le voir à la figure 1.

Les plaques de jonction 18a, 18b forment une première paire d'ailes 20 qui pince la première extrémité 12 de la bande transporteuse 16 et une seconde paire d'ailes 22 qui pince la seconde extrémité 14 de la bande transporteuse 16.

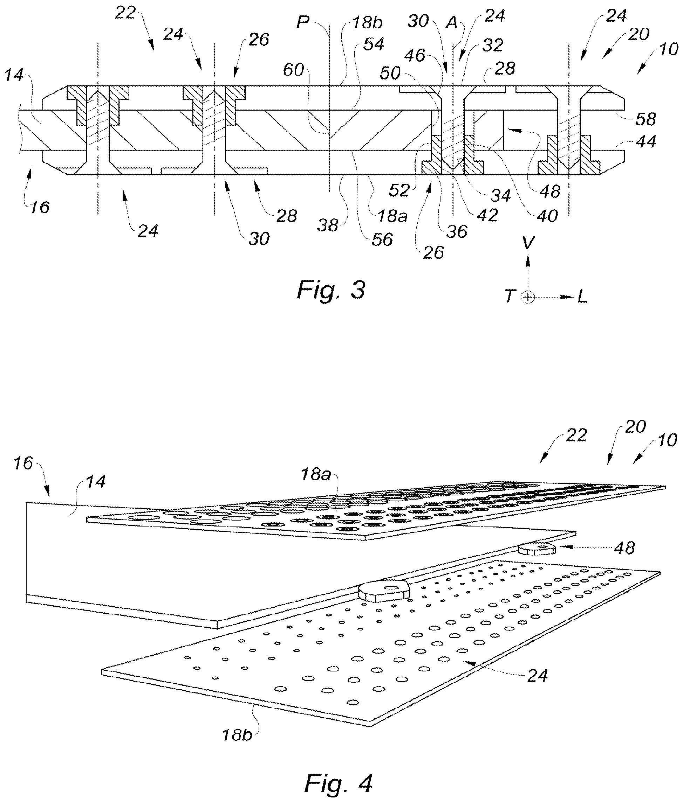

Comme on peut le voir sur les figures 3 et 4, la première paire d'ailes 20 et la seconde paire d'ailes 22 sont agencées de part et d'autre d'un plan P de jonction qui s'étend perpendiculairement aux plaques de jonction 18a, 18b, c'est-à-dire dans un plan vertical et transversal selon l'exemple décrit ici.

Le plan P de jonction s'étend transversalement au centre de l'ensemble formé par la première plaque de jonction 18a et la seconde plaque de jonction 18b.

De cette manière, une fois assemblée avec les extrémités 12, 14 de la bande transporteuse 16, la distance longitudinale de la première extrémité 12 recouverte par la première paire d'ailes 20 est équivalente à la distance longitudinale de la seconde extrémité 14 recouverte par seconde paire d'ailes 22 des plaques de jonction 18a, 18b.

Une telle caractéristique permet d'améliorer la résistance du dispositif de jonction.

De plus, le dispositif de jonction 10 comporte une première série de dispositifs de fixation 24 qui sont prévus pour fixer la première paire d'ailes 20 sur la première extrémité 12 de la bande transporteuse 16 et une seconde série de dispositifs de fixation 24 qui sont prévus pour fixer la seconde paire d'ailes 22 sur la seconde extrémité 14 de la bande transporteuse 16.

La première série et la seconde série de dispositifs de fixation 24 comportent chacune trois rangées de dispositifs de fixation 24, chaque rangée comportant une pluralité de dispositifs de fixation 24 qui sont alignés transversalement et espacés de façon régulière. Bien entendu, ce nombre de rangées peut varier.

Les dispositifs de fixation 24 de la première série comportent chacun un premier élément de fixation 26, un second élément de fixation 28 et un élément de liaison 30 vertical qui relie le premier élément de fixation 26 sur le second élément de fixation 28, à travers la bande transporteuse 16.

L'élément de liaison 30 est constitué par une vis qui s'étend verticalement depuis une tête 32 jusqu'à un corps formant tronçon d'ancrage 34 taraudé.

Le premier élément de fixation 26 présente la forme d'une douille qui est au moins en partie noyée dans la première plaque de jonction 18a.

Le premier élément de fixation 26 comprend une collerette 36 annulaire qui est en appui axial sur une face inférieure 38 de la première plaque de jonction 18a inférieure.

De plus, le premier élément de fixation 26 comprend une partie tubulaire 40 qui délimite un trou taraudé 42 vertical et qui fait saillie verticalement depuis la face supérieure 44 de la première plaque de jonction 18a, entre les deux plaques de jonction 18a, 18b. Cette saillie verticale est également recouverte de la matière vulcanisée formant la plaque de jonction de sorte que chaque partie tubulaire 40 qui fait saillie verticalement depuis la face inférieure d'une plaque de jonction est recouvert de caoutchouc vulcanisé et donc noyée dans la plaque de jonction associée.

Le trou taraudé 42 coopère avec le tronçon d'ancrage 34 de l'élément de liaison 30.

Le second élément de fixation 28 présente la forme d'une rondelle qui est noyée dans la seconde plaque de jonction 18b supérieure et qui délimite un trou de passage pour l'élément de liaison 30 et un siège 46 qui loge la tête 32 de l'élément de liaison 30.

Ainsi, les dispositifs de fixation 24 de la première série permettent de serrer la première paire d'ailes 20 sur la première extrémité 12 de la bande transporteuse 16.

De même, les dispositifs de fixation 24 de la seconde série sont identiques aux dispositifs de fixation 24 décrits ci-dessus, mais sont inversés dans leur agencement.

En effet, en référence à la figure 3, le premier élément de fixation 26 de chaque dispositif de fixation 24 de la seconde série est monté sur la seconde plaque de jonction 18b supérieure et le second élément de fixation 28 est monté sur la première plaque de jonction 18a inférieure.

La première plaque de jonction 18a et la seconde plaque de jonction 18b sont identiques, et elles sont décalées angulairement d'un demi-tour autour d'un axe vertical.

Du fait de cette inversion des dispositifs de fixation 24, est particulièrement avantageux étant donné que cela simplifie grandement la pose de la plaque de jonction par un opérateur puisqu'en fixant la plaque de jonction à une extrémité de la bande transporteuse les dispositifs de fixation 24, en particulier les éléments de liaison 30, présentent une orientation similaire pour une même extrémité de la bande transporteuse et l'opérateur n'est pas obligé de changer d'orientation pour la mise en place de ces éléments de liaison sur cette même extrémité. En effet, l'alignement vertical des premier et deuxième éléments de fixation 26, 28 détermine l'orientation des moyens de liaison 30, notamment des vis qui s'étendent verticalement depuis la tête 32 jusqu'au corps formant tronçon d'ancrage 34 taraudé.

On notera en outre que les première et seconde séries de dispositifs de fixation 24 sont espacées entre elles longitudinalement par une zone médiane sensiblement au droit du plan P de jonction qui est libre de dispositifs de fixation 24, c'est-à-dire que dans cette zone, le dispositif de jonction 10 ne comporte pas de dispositifs de fixation 24. Ceci améliore l'élasticité du dispositif de jonction 10 à cet endroit et améliore sa tenue mécanique. En effet, une rangée de dispositifs de fixation 24 au centre du dispositif de jonction 10 pourrait favoriser dans une moindre mesure une amorce de rupture.

Conformément à l'invention, le dispositif de jonction 10 comporte deux entretoises 48 amovibles qui sont chacune interposées verticalement entre la première plaque de jonction 18a et la seconde plaque de jonction 18b pour écarter les plaques.

Comme on peut le voir à la figure 3, chaque entretoise 48 est configurée pour être interposée entre les ailes de la première paire d'ailes 20 et est décalée du plan P de jonction, pour libérer l'espace délimité entre la seconde paire d'ailes 22.

On entend par l'expression « décalée du plan P de jonction » que le plan P de jonction n'est pas sécant aux entretoises 48.

Autrement dit, chaque entretoise 48 est décalée longitudinalement par rapport au centre de l'ensemble formé par les deux plaques de jonctions 18a, 18b, et chaque entretoise 48 est dégagée de l'espace qui est délimité entre la seconde paire d'ailes 22.

A cet effet, en référence à la figure 3, chaque entretoise 48 délimite un trou de centrage 50 qui s'étend suivant un axe A vertical et qui est adapté pour coopérer avec la partie tubulaire 40 saillante d'un premier élément de fixation 26 formant portion de centrage 52, pour positionner l'entretoise 48.

Aussi, chaque entretoise 48 est délimitée verticalement par une face supérieure 54 et une face inférieure 56 qui sont en appui vertical sur la face inférieure 58 de la seconde plaque de jonction 18b et sur la face supérieure 44 de la première plaque de jonction 18a respectivement.

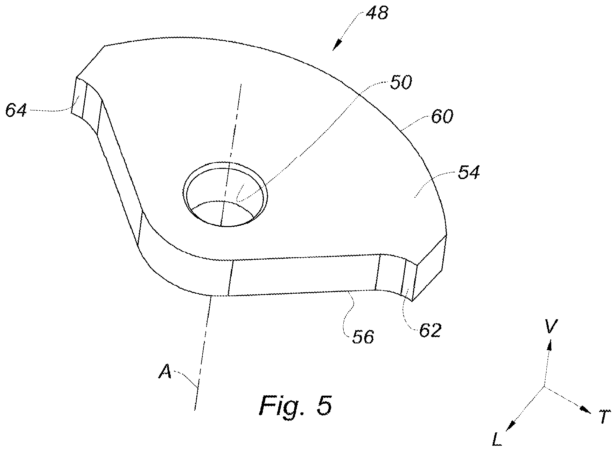

Selon les figures 2 à 5, chaque entretoise 48 présente une face de butée 60 qui est agencée en regard de la seconde paire d'ailes 22, et qui s'étend en partie le long du plan P de jonction, pour former une butée d'arrêt de la seconde extrémité 14 de la bande transporteuse 16 suivant le plan P de jonction, lorsque l'entretoise est en position assemblée, c'est-à-dire une butée contre laquelle la seconde extrémité 14 de la bande transporteuse 16 vient en contact et en butée suivant ce plan P de jonction.

Plus particulièrement, la face de butée 60 de chaque entretoise 48 présente la forme d'une portion angulaire d'un cylindre qui s'étend autour de l'axe A du trou de centrage 50 de l'entretoise 48 associée et qui est globalement tangente au plan P de jonction, comme on peut le voir sur la figure 2.

De plus, chaque entretoise 48 délimite une première face d'appui 62 et une seconde face d'appui 64 qui s'étendent chacune axialement suivant l'axe A du trou de centrage 50 associé.

En référence à la figure 2, la première face d'appui 62 et la seconde face d'appui 64 sont agencées chacune en regard d'au moins une partie d'un premier dispositif de fixation 24 et d'un second dispositif de fixation 24 respectivement qui sont opposés transversalement et qui sont adjacents transversalement aux dispositifs de fixation 24 qui portent l'entretoise 48, pour bloquer en pivotement l'entretoise 48 autour du trou de centrage 50 de l'entretoise 48, lorsque l'entretoise est en position assemblée.

La première face d'appui 62 et la seconde face d'appui 64 de chaque entretoise 48 sont en appui contre la partie tubulaire 40 saillante des premiers éléments de fixation 26 associés, laquelle est ici recouverte de matière vulcanisée.

En plus de bloquer en pivotement chaque entretoise 48, les faces d'appui 62, 64 permettent de répartir les efforts longitudinaux de poussée appliqués sur l'entretoise 48 associée par l'extrémité de la bande transporteuse 16.

A titre non limitatif, chaque face d'appui 62, 64 de l'entretoise peut délimiter un jeu (non représenté) qui favorise la mise en place de chaque entretoise 48 et qui est comblé par déformation élastique lorsque l'extrémité de la bande transporteuse appuie longitudinalement contre les entretoises 48.

On notera que de façon complémentaire ou alternative, l'entretoise 48 peut présenter une face d'appui, s'étendant également dans un plan axial suivant l'axe du trou de centrage 50, et qui est adaptée pour être en appui sur au moins une partie d'un dispositif de fixation adjacent pour bloquer en pivotement l'entretoise 48 autour du trou de centrage 50 de l'entretoise 48, le dispositif de fixation qui est adjacent au premier dispositif de fixation se situant sur une autre rangée de dispositifs de fixation et pas nécessairement transversalement.

L'invention concerne également un procédé pour la mise en œuvre du dispositif de jonction 10 selon l'invention décrit précédemment.

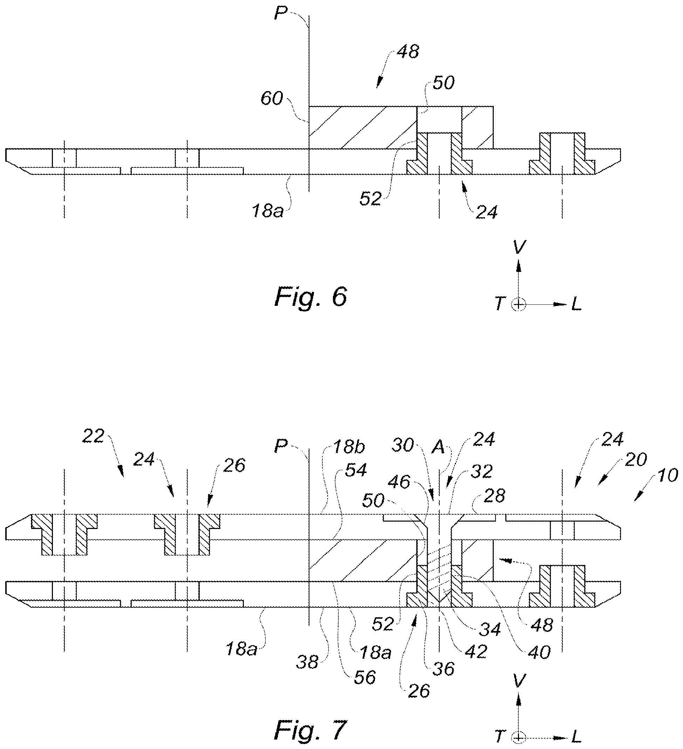

Le procédé comporte une étape préalable de mise en place de chaque entretoise 48, illustrée à la figure 6, qui consiste à faire coopérer le trou de centrage 50 de chaque entretoise 48 avec la portion de centrage 52 du dispositif de fixation 24 associé à chaque entretoise 48, de sorte que la face de butée 60 de chaque entretoise est tangente au plan P de jonction transversal.

Après avoir mis en place les entretoises 48 sur la première plaque de jonction 18a, la seconde plaque de jonction 18b est appareillée sur la première plaque de jonction 18a, comme on peut le voir à la figure 7, puis l'élément de liaison 30 des deux dispositifs de fixation 24 qui sont associés à une entretoise 48 est vissé sur le premier élément de fixation 26 associé pour pincer les ailes de la première paire d'ailes 20 sur les entretoises 48.

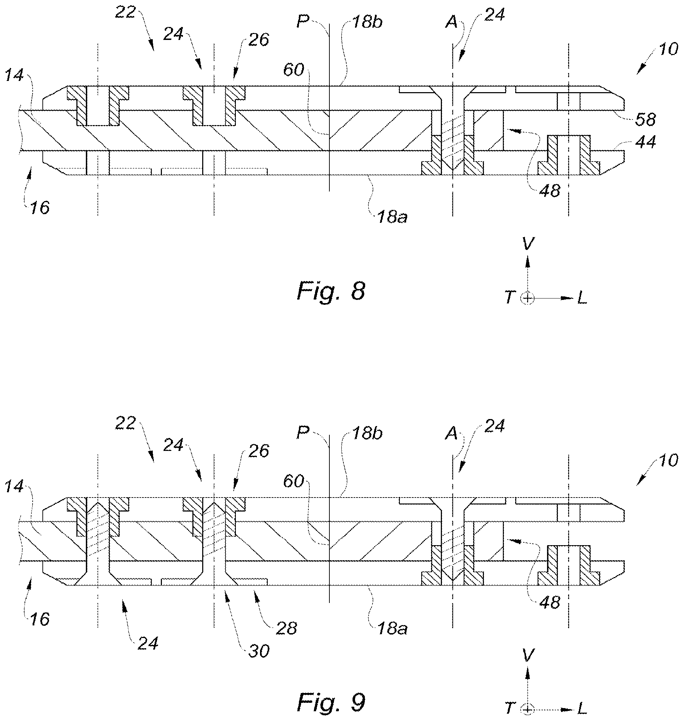

Aussi, le procédé comporte une étape d'insertion de la seconde extrémité 14 de la bande transporteuse 16 entre les deux ailes de la seconde paire d'ailes 22 formée par les plaques de jonction 18a, 18b, illustrée à la figure 8, dans une position de jonction dans laquelle la seconde extrémité 14 de la bande transporteuse 16 est en appui longitudinal sur chaque entretoise 48.

L'insertion de la seconde extrémité 14 de la bande transporteuse 16 est réalisée en écartant les ailes de la seconde paire d'ailles 22 qui se déforment élastiquement.

On constate que la position décalée, par rapport au plan P de jonction, du trou de centrage 50 de chaque entretoise 48 et des éléments de liaison 30 qui fixent les entretoises 48, favorise l'écartement des ailes de la seconde paire d'ailles 22 et favorise donc l'insertion de la seconde extrémité 14 de la bande transporteuse 16 jusqu'au plan P de jonction, c'est-à-dire sensiblement jusqu'au centre de l'ensemble formé par les deux plaques de jonction 18a, 18b.

L'étape d'insertion de la seconde extrémité 14 de la bande transporteuse 16 est suivie par une étape de fixation de la seconde extrémité 14 de la bande transporteuse 16 sur les deux ailes de la seconde paire d'ailes 22, au moyens de la seconde série de dispositif de fixation 24, comme on peut le voir à la figure 9.

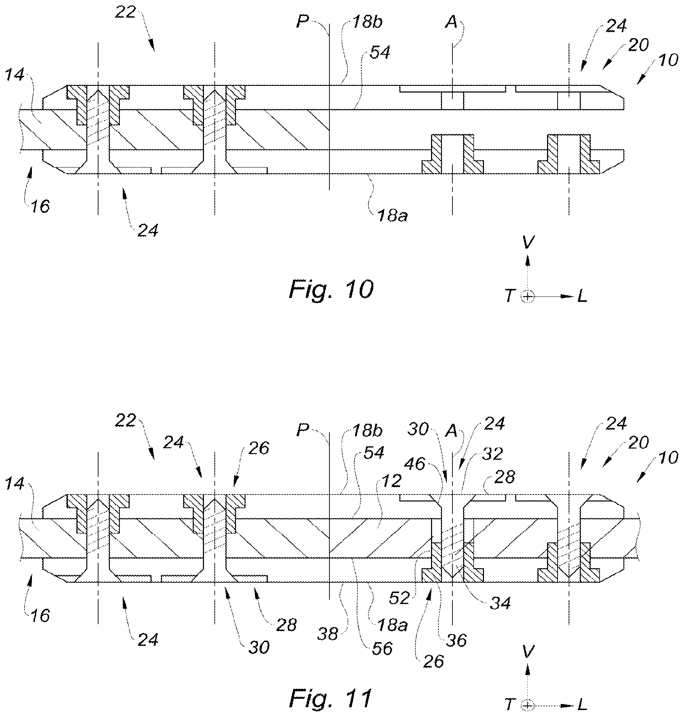

Après avoir fixé tout ou partie de la seconde extrémité 14 de la bande transporteuse 16, le procédé comporte une étape de retrait des entretoise 48, illustrée à la figure 10, qui consiste à dévisser les éléments de liaison 30 qui retiennent les deux entretoises 48 et à retirer les entretoises d'entre les ailes de la première paire 20 d'ailes formée par les plaques de jonction 18a, 18b.

L'étape de retrait est suivie par une étape d'insertion de la première extrémité 12 de la bande transporteuse 16 entre les deux ailes de la première paire d'ailes 20 formée par les plaques de jonction 18a, 18b, dans une position de jonction dans laquelle la première extrémité 12 de la bande transporteuse 16 peut atteindre le plan P de jonction.

Enfin, en référence à la figure 11, le procédé comporte une étape de fixation de la première extrémité 12 de la bande transporteuse 16 sur les deux ailes de la première paire d'ailes 20.

L'invention est décrite dans ce qui précède à titre d'exemple. Il est entendu que l'homme du métier est à même de réaliser différentes variantes de réalisation de l'invention sans pour autant sortir du cadre de l'invention.

## Revendications

1. Dispositif de jonction (10) pour relier deux extrémités (12, 14) d'au moins une bande transporteuse (16) longitudinale, le dispositif de jonction (10) comportant au moins :
- une première plaque de jonction (18a) et une seconde plaque de jonction (18b) qui sont configurées pour recouvrir chacune un côté distinct des extrémités de la bande transporteuse (16) de sorte que ladite bande transporteuse (16) est interposée verticalement entre les deux plaques de jonction (18a, 18b), lesdites plaques de jonction (18a, 18b) formant une première paire d'ailes (20) qui est adaptée pour pincer une première extrémité (12) de la bande transporteuse (16) et une seconde paire d'ailes (22) qui est adaptée pour pincer une seconde extrémité (14) de la bande transporteuse (16), la première paire d'ailes (20) et la seconde paire d'ailes (22) étant agencées de part et d'autre d'un plan (P) de jonction, le plan (P) de jonction s'étendant transversalement au centre de l'ensemble formé par la première plaque de jonction (18a) et la seconde plaque de jonction (18b),
- un dispositif de fixation (24) desdites plaques de jonction (18a, 18b) entre elles,
- une entretoise (48) amovible qui est configurée pour être interposée verticalement entre la première plaque de jonction (18a) et la seconde plaque de jonction (18b) pour écarter lesdites plaques, et qui délimite un trou de centrage (50) agencé pour être traversé par un élément de liaison (30) qui fixe l'entretoise (48) sur les plaques de jonction (18a, 18b),
**caractérisé en ce que** l'entretoise (48) est adaptée pour être interposée entre les ailes de la première paire d'ailes (20), de sorte que le trou de centrage (50) de l'entretoise (48) est décalé du plan (P) de jonction, pour libérer l'espace délimité entre la seconde paire d'ailes (22), l'entretoise (48) présentant une face de butée (60) qui est agencée en regard de la seconde paire d'ailes (22), et qui s'étend au moins en partie le long du plan (P) de jonction, pour former une butée d'arrêt de la bande transporteuse (16) suivant le plan (P) de jonction, lorsque l'entretoise (48) est en position assemblée.

2. Dispositif de jonction (10) selon la revendication 1, **caractérisé en ce que** l'entretoise (48) est adaptée pour être agencée entièrement entre les ailes de la première paire d'ailes (20).

3. Dispositif de jonction (10) selon la revendication 1 ou 2, **caractérisé en ce que** le dispositif de fixation (24) comprend au moins un premier élément de fixation (26) qui est monté sur la première plaque de jonction (18a), un second élément de fixation (28) associé qui est monté sur la seconde plaque de jonction (18b), un élément de liaison (30) qui relie le premier élément de fixation (26) sur le second élément de fixation (28), et le premier élément de fixation (26) comprenant une portion de centrage (52) qui fait saillie verticalement depuis la première plaque de jonction (18a) et qui est configuré pour coopérer avec le trou de centrage (50) de l'entretoise (48) pour positionner l'entretoise (48).

4. Dispositif de jonction (10) selon l'une quelconque des revendications précédentes, **caractérisé en ce que** la face de butée (60) de l'entretoise (48) présente la forme d'une portion angulaire d'un cylindre qui s'étend autour du trou de centrage (50) de l'entretoise et qui est globalement tangente au plan (P) de jonction.

5. Dispositif de jonction (10) selon l'une quelconque des revendications précédentes, **caractérisé en ce qu'**il comporte au moins un deuxième dispositif de fixation (24) qui est adjacent au premier dispositif de fixation (24), et **en ce que** l'entretoise (48) délimite au moins une première face d'appui (62) qui est agencée en regard d'au moins une partie du deuxième dispositif de fixation (24), pour bloquer en pivotement l'entretoise (48) autour du trou de centrage (50) de l'entretoise, lorsque l'entretoise (48) est en position assemblée.

6. Dispositif de jonction (10) selon la revendication 3, **caractérisé en ce que** l'élément de liaison (30) comprend une tête (32) qui est adaptée pour coopérer avec ledit second élément de fixation (28), et un tronçon d'ancrage (34) qui est adapté pour coopérer avec ledit premier élément de fixation (26) du dispositif de fixation (24) associé.

7. Dispositif de jonction (10) selon l'une quelconque des revendications précédentes, **caractérisé en ce que** la première plaque de jonction (18a) et la seconde plaque de jonction (18b) sont identiques et complémentaires.

8. Entretoise (48) pour un dispositif de jonction (10) de deux extrémités d'une bande transporteuse (16) longitudinale, le dispositif de jonction (10) étant du type comportant au moins :
- une première plaque de jonction (18a) et une seconde plaque de jonction (18b) qui sont configurées pour recouvrir chacune un côté distinct des extrémités de la bande transporteuse (16) de sorte que ladite bande transporteuse (16) est interposée verticalement entre les deux plaques de jonction (18a, 18b), lesdites plaques de jonction (18a, 18b) formant une première paire d'ailes (20) qui est adaptée pour pincer une première extrémité (12) de la bande transporteuse (16) et une seconde paire d'ailes (22) qui est adaptée pour pincer une seconde extrémité (14) de la bande transporteuse (16), la première paire d'ailes (20) et la seconde paire d'ailes (22) étant agencées de part et d'autre d'un plan (P) de jonction,
- un premier dispositif de fixation (24) comprenant une portion de centrage (52) qui fait saillie verticalement, et un deuxième dispositif de fixation (24) qui est adjacent au premier dispositif de fixation (24),
l'entretoise (48) étant adaptée pour être interposée verticalement entre la première plaque de jonction (18a) et la seconde plaque de jonction (18b) pourécarter lesdites plaques, et l'entretoise (48) délimitant au moins :
- un trou de centrage (50) qui est adapté pour coopérer avec ladite portion de centrage (52) pour positionner l'entretoise (48),
- une première face d'appui (62) qui s'étend globalement dans un plan axial suivant l'axe du trou de centrage (50) et qui est adaptée pour être en appui sur au moins une partie du deuxième dispositif de fixation (24), pour bloquer en pivotement l'entretoise (48) autour du trou de centrage (50) de l'entretoise (48), et
- une face de butée (60) qui est adaptée pour former une butée d'arrêt de la bande transporteuse (16) suivant le plan (P) de jonction.

9. Entretoise (48) selon la revendication 8, **caractérisée en ce que** la face de butée (60) présente la forme d'une portion angulaire d'un cylindre qui s'étend suivant l'axe du trou de centrage (50) de l'entretoise (48).

10. Procédé pour la mise en œuvre d'un dispositif de jonction (10) selon l'une quelconques des revendications 1 à 7, le dispositif de jonction (10) comportant une bande transporteuse (16) qui présente une première extrémité (12) et une seconde extrémité (14), **caractérisé en ce qu'**il comporte au moins :
- une étape d'insertion de la seconde extrémité (14) de la bande transporteuse (16) entre les deux ailes de la seconde paire (22) d'ailes formée par les plaques de jonction (18a, 18b), dans une position de jonction dans laquelle la seconde extrémité (14) de la bande transporteuse (16) est en appui sur l'entretoise (48),
- une étape de fixation de la seconde extrémité (14) de la bande transporteuse (16) sur les deux ailes de la seconde paire d'ailes (22),
- une étape de retrait de l'entretoise (48) qui consiste à retirer l'entretoise (48) d'entre les ailes de la première paire d'ailes (20) formée par les plaques de jonction (18a, 18b),
- une étape d'insertion de la première extrémité (12) de la bande transporteuse (16) entre les deux ailes de la première paire d'ailes (20) formée par les plaques de jonction (18a, 18b), dans une position de jonction, et
- une étape de fixation de la première extrémité (12) de la bande transporteuse (16) sur les deux ailes de la première paire d'ailes (20).

## Patentansprüche

1. Verbindungsvorrichtung (10) zum Befestigen von zwei Enden (12, 14) von wenigstens einem längslaufenden Transportband (16), wobei die Verbindungsvorrichtung (10) wenigstens Folgendes aufweist:
- eine erste Verbindungsplatte (18a) und eine zweite Verbindungsplatte (18b), die konfiguriert sind, um jeweils eine separate Seite der Enden des Transportbands (16) zu bedecken, so dass das Transportband (16) vertikal zwischen den zwei Verbindungsplatten (18a, 18b) gelegen ist, wobei die Verbindungsplatten (18a, 18b) ein erstes Flanschpaar (20), das geeignet ist, ein erstes Ende (12) des Transportbandes (16) einzuklemmen, und ein zweites Flanschpaar (22) ausbilden, das geeignet ist, ein zweites Ende (14) des Transportbandes (16) einzuklemmen, wobei das erste Flanschpaar (20) und das zweite Flanschpaar (22) auf beiden Seiten einer Verbindungsebene (P) angeordnet sind, wobei sich die Verbindungsebene (P) quer in die Mitte der Anordnung, die durch die erste Verbindungsplatte (18a) und die zweite Verbindungsplatte (18b) ausgebildet ist, erstreckt,
- eine Feststellvorrichtung (24) der Verbindungsplatten (18a, 18b) zwischen ihnen,
- einen abnehmbaren Abstandshalter (48), der konfiguriert ist, um vertikal zwischen der ersten Verbindungsplatte (18a) und der zweiten Verbindungsplatte (18b) gelegen zu sein, um die Platten zu trennen, und der eine Körnerbohrung (50) begrenzt, die angeordnet ist, um von einem Befestigungselement (30) durchlaufen zu werden, das den Abstandshalter (48) an den Verbindungsplatten (18a, 18b) feststellt,
**dadurch gekennzeichnet, dass** der Abstandshalter (48) geeignet ist, zwischen den Flanschen des ersten Flanschpaares (20) gelegen zu sein, so dass die Körnerbohrung (50) des Abstandshalters (48) von der Verbindungsebene (P) versetzt ist, um den zwischen dem zweiten Flanschpaar (22) begrenzten Raum freizugeben, wobei der Abstandshalter (48) eine Anschlagsfläche (60) vorweist, die gegenüber dem zweiten Flanschpaar (22) angeordnet ist und die sich wenigstens teilweise entlang der Verbindungsebene (P) erstreckt, um einen harten Anschlag für das Transportband (16) entlang der Verbindungsebene (P) auszubilden, wenn sich der Abstandshalter (48) in der zusammengebauten Position befindet.

2. Verbindungsvorrichtung (10) nach Anspruch 1, **dadurch gekennzeichnet, dass** der Abstandshalter (48) geeignet ist, vollständig zwischen den Flanschen des ersten Flanschpaares (20) angeordnet zu werden.

3. Verbindungsvorrichtung (10) nach Anspruch 1 oder 2, **dadurch gekennzeichnet, dass** die Feststellvorrichtung (24) wenigstens ein erstes Feststellelement (26), das an der ersten Verbindungsplatte (18a) angebracht ist, ein zweites zugehöriges Feststellelement (28), das an der zweiten Verbindungsplatte (18b) angebracht ist, ein Befestigungselement (30) umfasst, das das erste Feststellelement (26) an dem zweiten Feststellelement (28) befestigt, und wobei das erste Feststellelement (26) einen Zentrierabschnitt (52) umfasst, der vertikal von der ersten Verbindungsplatte (18a) hervorsteht und der konfiguriert ist, um mit der Körnerbohrung (50) des Abstandshalters (48) zusammenzuwirken, um den Abstandshalter (48) zu positionieren.

4. Verbindungsvorrichtung (10) nach einem der vorhergehenden Ansprüche, **dadurch gekennzeichnet, dass** die Anschlagsfläche (60) des Abstandshalters (48) die Form eines Winkelabschnitts eines Zylinders vorweist, der sich um die Körnerbohrung (50) des Abstandshalters herum erstreckt und der im Allgemeinen tangential zu der Verbindungsebene (P) ist.

5. Verbindungsvorrichtung (10) nach einem der vorhergehenden Ansprüche, **dadurch gekennzeichnet, dass** sie wenigstens eine zweite Feststellvorrichtung (24) aufweist, die an die erste Feststellvorrichtung (24) angrenzt, und dass der Abstandshalter (48) wenigstens eine erste Auflagefläche (62) begrenzt, die wenigstens einem Teil der zweiten Feststellvorrichtung (24) gegenüber angeordnet ist, um den Abstandshalter (48) beim Schwenken um die Körnerbohrung (50) des Abstandshalters zu blockieren, wenn der Abstandshalter (48) sich in der zusammengebauten Position befindet.

6. Verbindungsvorrichtung (10) nach Anspruch 3, **dadurch gekennzeichnet, dass** das Befestigungselement (30) einen Kopf (32), der geeignet ist, mit dem zweiten Feststellelement (28) zusammenzuwirken, und einen Verankerungsabschnitt (34) umfasst, der geeignet ist, mit dem ersten Feststellelement (26) der zugehörigen Feststellvorrichtung (24) zusammenzuwirken.

7. Verbindungsvorrichtung (10) nach einem der vorhergehenden Ansprüche, **dadurch gekennzeichnet, dass** die erste Verbindungsplatte (18a) und die zweite Verbindungsplatte (18b) identisch und komplementär sind.

8. Abstandshalter (48) für eine Verbindungsvorrichtung (10) von zwei Enden von einem längslaufenden Transportband (16), wobei die Verbindungsvorrichtung (10) der Art entspricht, die wenigstens Folgendes aufweist:
- eine erste Verbindungsplatte (18a) und eine zweite Verbindungsplatte (18b), die konfiguriert sind, um jeweils eine separate Seite der Enden des Transportbands (16) zu bedecken, so dass das Transportband (16) vertikal zwischen den zwei Verbindungsplatten (18a, 18b) gelegen ist, wobei die Verbindungsplatten (18a, 18b) ein erstes Flanschpaar (20), das geeignet ist, ein erstes Ende (12) des Transportbandes (16) einzuklemmen, und ein zweites Flanschpaar (22) ausbilden, das geeignet ist, ein zweites Ende (14) des Transportbandes (16) einzuklemmen, wobei das erste Flanschpaar (20) und das zweite Flanschpaar (22) auf beiden Seiten einer Verbindungsebene (P) angeordnet sind,
- eine erste Feststellvorrichtung (24), die einen Zentrierabschnitt (52) umfasst, der vertikal hervorsteht, und eine zweite Feststellvorrichtung (24), die an die erste Feststellvorrichtung (24) angrenzt,
wobei der Abstandshalter (48) geeignet ist, vertikal zwischen der ersten Verbindungsplatte (18a) und der zweiten Verbindungsplatte (18b) gelegen zu sein, um die Platten zu trennen, und der Abstandshalter (48) wenigstens Folgendes begrenzt:
- eine Körnerbohrung (50), die geeignet ist, mit dem Zentrierabschnitt (52) zusammenzuwirken, um den Abstandshalter (48) zu positionieren,
- eine erste Auflagefläche (62), die sich im Allgemeinen in einer axialen Ebene entlang der Achse der Körnerbohrung (50) erstreckt und die geeignet ist, wenigstens an einem Teil der zweiten Feststellvorrichtung (24) aufzuliegen, um den Abstandshalter (48) beim Schwenken um die Körnerbohrung (50) des Abstandshalters (48) zu blockieren, und
- eine Anschlagsfläche (60), die geeignet ist, einen harten Anschlag des Transportbandes (16) entlang der Verbindungsebene (P) auszubilden.

9. Abstandshalter (48) nach Anspruch 8, **dadurch gekennzeichnet, dass** die Anschlagsfläche (60) die Form eines Winkelabschnitts eines Zylinders vorweist, der sich entlang der Achse der Körnerbohrung (50) des Abstandshalters (48) erstreckt.

10. Verfahren zum Anwenden einer Verbindungsvorrichtung (10) nach einem der Ansprüche 1 bis 7, wobei die Verbindungsvorrichtung (10) ein Transportband (16) aufweist, das ein erstes Ende (12) und ein zweites Ende (14) vorweist, **dadurch gekennzeichnet, dass** es wenigstens Folgendes umfasst:
- einen Schritt des Einführens des zweiten Endes (14) des Transportbandes (16) zwischen die zwei Flansche des zweiten Flanschpaares (22), das durch die Verbindungsplatten (18a, 18b) ausgebildet ist, in einer Verbindungsposition, in der das zweite Ende (14) des Transportbandes (16) an dem Abstandshalter (48) aufliegt,
- einen Schritt des Feststellens des zweiten Endes (14) des Transportbandes (16) an den zwei Flanschen des zweiten Flanschpaares (22),
- einen Schritt des Abziehens des Abstandshalters (48), der darin besteht, den Abstandshalter (48) zwischen den Flanschen des ersten Flanschpaares (20) abzuziehen, das durch die Verbindungsplatten (18a, 18b) ausgebildet ist,
- einen Schritt des Einführens des ersten Endes (12) des Transportbandes (16) zwischen die zwei Flansche des ersten Flanschpaares (20), das durch die Verbindungsplatten (18a, 18b) ausgebildet ist, in einer Verbindungsposition, und
- einen Schritt des Feststellens des ersten Endes (12) des Transportbandes (16) an den zwei Flanschen des ersten Flanschpaares (20).

## Claims

1. Joining device (10) for connecting two ends (12, 14) of at least one longitudinal conveyor belt (16), the joining device (10) comprising at least:
- a first joining plate (18a) and a second joining plate (18b) which are each configured to cover a different side of the ends of the conveyor belt (16) such that said conveyor belt (16) is interposed vertically between the two joining plates (18a, 18b), said joining plates (18a, 18b) forming a first pair of wings (20) which is suitable for clamping a first end (12) of the conveyor belt (16) and a second pair of wings (22) which is suitable for clamping a second end (14) of the conveyor belt (16), the first pair of wings (20) and the second pair of wings (22) being arranged on either side of a joining plane (P), the joining plane (P) extending transversely to the center of the assembly formed by the first joining plate (18a) and the second joining plate (18b),
- a device (24) for securing said joining plates (18a, 18b) together,
- a removable spacer (48) which is configured to be interposed vertically between the first joining plate (18a) and the second joining plate (18b) in order to space said plates apart, and which defines a centering hole (50) that is arranged such that a connecting element (30) which secures the spacer (48) to the joining plates (18a, 18b) can pass through said hole,
**characterized in that** the spacer (48) is suitable for being interposed between the wings of the first pair of wings (20) such that the centering hole (50) of the spacer (48) is offset from the joining plane (P), in order to free the space defined between the second pair of wings (22), the spacer (48) having an abutment face (60) which is arranged so as to face the second pair of wings (22), and which extends at least in part along the joining plane (P), in order to form a stop for the conveyor belt (16) along the joining plane (P) when the spacer (48) is in the assembled position.

2. Joining device (10) according to claim 1, **characterized in that** the spacer (48) is suitable for being arranged entirely between the wings of the first pair of wings (20).

3. Joining device (10) according to either claim 1 or claim 2, **characterized in that** the securing device (24) includes at least a first securing element (26) which is mounted on the first joining plate (18a), a second associated securing element (28) which is mounted on the second joining plate (18b), and a connecting element (30) which connects the first securing element (26) to the second securing element (28), the first securing element (26) comprising a centering portion (52) which protrudes vertically from the first joining plate (18a) and which is configured to interact with the centering hole (50) of the spacer (48) in order to position the spacer (48).

4. Joining device (10) according to any of the preceding claims, **characterized in that** the abutment face (60) of the spacer (48) has the shape of an angular portion of a cylinder which extends around the centering hole (50) of the spacer and which is generally tangent to the joining plane (P).

5. Joining device (10) according to any of the preceding claims, **characterized in that** it comprises at least a second securing device (24) which is adjacent to the first securing device (24), and **in that** the spacer (48) defines at least a first bearing face (62) which is arranged so as to face at least part of the second securing device (24), in order to block the spacer (48) from pivoting about the centering hole (50) of the spacer when the spacer (48) is in the assembled position.

6. Joining device (10) according to claim 3, **characterized in that** the connecting element (30) includes a head (32) which is suitable for interacting with said second securing element (28), and an anchoring part (34) which is suitable for interacting with said first securing element (26) of the associated securing device (24).

7. Joining device (10) according to any of the preceding claims, **characterized in that** the first joining plate (18a) and the second joining plate (18b) are identical and complementary.

8. Spacer (48) for a device (10) for joining two ends of a longitudinal conveyor belt (16), the joining device (10) being of the type comprising at least:
- a first joining plate (18a) and a second joining plate (18b) which are each configured to cover a different side of the ends of the conveyor belt (16) such that said conveyor belt (16) is interposed vertically between the two joining plates (18a, 18b), said joining plates (18a, 18b) forming a first pair of wings (20) which is suitable for clamping a first end (12) of the conveyor belt (16) and a second pair of wings (22) which is suitable for clamping a second end (14) of the conveyor belt (16), the first pair of wings (20) and the second pair of wings (22) being arranged on either side of a joining plane (P),
- a first securing device (24) including a centering portion (52) which protrudes vertically, and a second securing device (24) which is adjacent to the first securing device (24),
the spacer (48) being suitable for being interposed vertically between the first joining plate (18a) and the second joining plate (18b) in order to separate said plates, and the spacer (48) defining at least:
- a centering hole (50) which is suitable for interacting with said centering portion (52) in order to position the spacer (48),
- a first bearing face (62) which extends generally in an axial plane along the axis of the centering hole (50) and which is suitable for bearing on at least part of the second securing device (24), in order to block the spacer (48) from pivoting about the centering hole (50) of the spacer (48), and
- an abutment face (60) which is suitable for forming a stop for the conveyor belt (16) along the joining plane (P).

9. Spacer (48) according to claim 8, **characterized in that** the stop face (60) has the shape of an angular portion of a cylinder which extends along the axis of the centering hole (50) of the spacer (48).

10. Method for implementing a joining device (10) according to any of claims 1 to 7, the joining device (10) comprising a conveyor belt (16) which has a first end (12) and a second end (14), **characterized in that** said method comprises at least:
- a step of inserting the second end (14) of the conveyor belt (16) between the two wings of the second pair of wings (22) formed by the joining plates (18a, 18b), in a joining position in which the second end (14) of the conveyor belt (16) bears on the spacer (48),
- a step of securing the second end (14) of the conveyor belt (16) to the two wings of the second pair of wings (22),
- a step of removing the spacer (48) consisting in removing the spacer (48) from between the wings of the first pair of wings (20) formed by the joining plates (18a, 18b),
- a step of inserting the first end (12) of the conveyor belt (16) between the two wings of the first pair of wings (20) formed by the joining plates (18a, 18b), in a joining position, and
- a step of securing the first end (12) of the conveyor belt (16) to the two wings of the first pair of wings (20).
